# EUROPÄISCHE PATENTSCHRIFT

(11) **EP 2 354 193 B1**
(45) Veröffentlichungstag und Bekanntmachung des Hinweises auf die Patenterteilung: **05.09.2012**
(21) Anmeldenummer: 10151479.2
(22) Anmeldetag: 22.01.2010
(51) Int. Cl.: C09D 11/00, C09D 11/16, C09D 17/00

(54) **Metallictinte**
Metallic ink
Encre métallique

(43) Veröffentlichungstag der Anmeldung: 10.08.2011
(73) Patentinhaber: Faber- Castell AG, 90546 Stein (DE)
(72) Erfinder: Lugert, Gerhard Dr., 90431, Nürnberg (DE); Schwarz, Wolfgang, 91522, Ansbach (DE)
(74) Vertreter: Mörtel & Höfner

(56) Entgegenhaltungen:
- WO-A1-2008/101146
- WO-A1-2009/144005
- US-A- 4 545 819
- US-A- 4 657 591
- US-A- 5 037 475

## Beschreibung

Die Erfindung betrifft eine farbige, Metallpigmente enthaltende Schreib- Markier- und Zeichenflüssigkeit auf Wasserbasis, die für den Einsatz in kapillaren Auftragsgeräten, also etwa Stiften, mit einem Auftragselement, einer Schreibspitze, aus einem kapillaren Material und einem ein ebensolches Material enthaltenden Tintenspeicher. Das kapillare Material, das z.B. aus Fasern oder einem Sintermaterial besteht, ist von einer Vielzahl feinster Kanäle durchzogen, in denen die Tinte aufgrund von Adhäsionskräften bzw. des Kapillareffekts transportiert wird. Damit die Kapillarkanäle nicht verstopfen, müssen die verwendeten Farb- und Metallpigmente relativ klein sein. Wird eine solche Tinte mit dem Auftragsgerät auf eine übliche Papierunterlage übertragen, besteht die Gefahr, dass die Farbpigmentpartikel zusammen mit dem Lösungsmittel in die Papierunterlage, die mit den Kanälen des kapillaren Materials vergleichbare Poren auf weist, migrieren. Bei den in der Tinte vorhandenen Metallpartikeln ist die Migrationsfähigkeit wesentlich schwächer oder überhaupt nicht vorhanden, was u.a. auf die Blättchenstruktur der Metallpartikel zurückzuführen ist. An der Papieroberfläche erfolgt daher eine Verarmung an Farbpigment, so dass der an sich gewünschte Farbton verblasst oder ganz verschwindet. Besonders ausgeprägt ist dieser Effekt beispielsweise bei Tinten, die blaue Farbpigmente, etwa Phthalocyaninpigmente, und Aluminiumpartikel enthalten und die auf schwarze Papiere (z.B. Tonzeichenpapieren mit 125 g/qm, Canson Referenz 4331659) aufgetragen werden. Der blaue Farbton verschwindet hier nahezu vollständig, so dass sich lediglich ein silberner, teilweise ins Graue übergehender Farbton ergibt.

Aufgabe der Erfindung ist es, eine Metallictinte vorzuschlagen, die hinsichtlich einer Migration ihrer Farbpigmente in eine saugende Papierunterlage verbessert ist.

Diese Aufgabe wird durch eine Metallictinte nach Anspruch 1 gelöst. Diese enthält 30 % bis 80% Wasser, 1 % bis 15 % eines in gelöster Form vorliegenden Maleinatharzes, d.h. eines Harzes aus der Gruppe Maleinatharz und/oder mit Maleinsäure modifiziertes Kolophoniumharz, 0,4 % bis 10 % Farbpigmente mit einer Teilchengioße ≤ 6 µm 1% bis 15 % Metallpigmente mit einer Korngröβenverteilung D50 <25 µm, 1% bis 20 % Feuchthaltemittel und 0,2 % bis 12 % Additive, und einer Vikosität von 5-10 mPa·s, wobei sich etwa folgende Basisrezeptur ergibt:

| | |
|---|---|
| Maleinatharz | 1 bis 15 % |
| Wasser | 30 bis 80 % |
| Feuchthaltemittel wie Glycerin oder Glykole | 1 bis 20 % |
| Metallpigmente | 1 bis 15 % |
| Farbpigmente | 0,4 bis 10 % |
| Additive wie Metzmittel, Dispergier-Hilfsmittel, Korrosionsinhibitoren | 0,1 bis 10 % |
| Konservierungsmittel | 0,1 bis 2 % |

Der hinsichtlich eines verbesserten Migrationsverhaltens entscheidende Bestandteil der Tinte sind die in der wässerigen Matrix in gelöster Form vorliegenden Maleinatharze. Aufgrund der ausbleibenden oder zumindest verringerten Partikelmigration bleibt der ursprüngliche Farbton erhalten oder verblasst in geringerem Ausmaß, als die bei Tinten der Fall ist, welche die genannten Maleinatharze nicht enthalten. Bei Tinten mit einem Anteil an Maleinatharzen von weniger als 1 % ist eine Partikelmigration nur noch in einem Ausmaß verringert, dass sich gegenüber einer Tinte ohne Maleinatharz kein mit dem bloßen Auge erkennbarer Effekt ergibt. Andererseits ist bei Gehalten oberhalb von 10 % eine weitere Verbesserung des Migrationsverhaltens nicht mehr zu beobachten.

### Harz 1:

Eines der erfindungsgemäßen Maleinatharze ist ein sog. Maleinsäure modifiziertes Kolophoniumharz, also ein Kolophoniumharz, an das Maleinsäure gebunden ist, und zwar in einer Weise, dass sich ein Harz mit einer Säurezahl (DIN 53402) von 125 bis 145 mg KOH/g ergibt. Die eingesetzten Harze weisen noch folgende weitere Spezifikation auf:

| | |
|---|---|
| Schmelzpunkt (Kofler-Heizbank, 6 min): Viskosität (Auslaufzeit 60%iges | 125 ± 10°C |
| Ethanol / 20°C; 4DIN53211): | 80 - 140 s |
| Säurezahl (DIN 53402): | 125 - 145 mg KOH/g |
| Farbzahl (Gardener Colour Standard, 50 %ig K-30 ASTMD1544): | ≤ 11 |
| Dichte des Rohmaterials bei 20 °C (ca.): | 1,1 g / cm³ |

Ein derartiges Harz ist z.B. unter dem Handelsnamen Erkamar® 3140 **¹⁾** erhältlich.

### Harz 2:

Das andere Harz ist ein modifiziertes, oxidationsstabiles Maleinatharz mit folgender Spezifikation:

| | |
|---|---|
| Schmelzpunkt (Kofler-Heizbank, 6 min): | 135 ± 10 °C |
| Viskosität (Auslaufzeit 60 %iges Ethanol / 20°C; 4DIN53211) | 75 - 125 s |
| Säurezahl (DIN 53402): Farbzahl (Gardener Colour Standard; | 165 - 200 mg KOH/g |
| 50%iges Ethanol ASTMD 1544): | ≤ 10 |
| Dichte (Lieferform 20°C) | ca. 1,1 g/cm³ |
| Hydroxylzahl: | ca. 140 mg KOH/g |

Ein derartiges Harz ist z.B. unter dem Handelsnamen Erkamar® 4170 **¹⁾** erhältlich.

Die in Rede stehende Migration von Farbpigmenten wird auch noch dadurch verringert, dass Wasser und nicht ein organisches Lösungsmittel verwendet wird. Organische Lösungsmittel neigen nämlich vor allem bei dünnen Papieren zum "Durchschlagen", d.h. sie dringen relativ schnell durch das Papier hindurch, wobei sie Farbpigmente in das Papier hinein transportieren.

Bei der Verwendung von Harz 1 und/oder Harz 2 wird außerdem ein weiterer Nachteil herkömmlicher Metallictinten, nämlich deren Sedimentationsneigung beseitigt, d.h. der Effekt, dass sich Metall- und Farbpigmentpartikel, insbesondere nach längerer Lagerung, trotz in der Tinte üblicherweise enthaltener Dispergierhilfsmittel aus der Lösung unter Bildung eines Sediments absetzen. Dabei besteht die Gefahr, dass die Metall- und Farbpigmente die Kapillarkanäle des Flüssigkeitsspeichers und des Auftragselements verstopfen. Mit einer erfindungsgemäßen Tinte werden somit zwei negative Effekte herkömmlicher Tinten, also das Verschwinden bzw. Verblassen der Farbe durch Farbpigmentmigration und die Sedimentation von Partikeln, vor allem von Metallpigmenten, vermieden oder zumindest verringert.

Eine besonders dauerhafte Dispersion der Metallpartikel, insbesondere der vorzugsweise eingesetzten Aluminiumpartikel, und der Farbpigmente wird die Zugabe einer phosphororganischen Verbindung (z.B. Nuosperse® FA 196 ³⁾) erreicht. Die geschilderten nachteiligen Effekte werden somit am besten verringert oder ganz verhindert, wenn in der Metallictinte wenigstens eines der genannten Harze und eine phosphororganische Verbindung enthalten ist.

Als Farbpigmente kommen praktisch alle gängigen, für Schreib- und Malanwendungen geeignete und zugelassene Pigmente in Frage, beispielsweise Flexiverse® - Pigmente **⁹⁾**, Hostafine® - Pigmente und Euronyl® Standard-Pigmente eingesetzt werden, und zwar mit Blick auf die Kapillargängigkeit mit einer Teilchengröße ≤ 6 µm. Zur Verbesserung der Stabilität der Tinten und auch zur Erleichterung der Dispergierung werden als Dispergierhilfsmittel hochmolekulare Block-Copolymere mit pigmentaffinen Gruppen eingesetzt. Die Korngrößenverteilung der eingesetzten Metallpigmente (Aluminium, Gold, Kupfer oder Bronze) sollte D₅₀ < 25 µm sein um eine Kapillargängigkeit sicherzustellen. Insbesondere bei Aluminium als Metallpigment empfiehlt sich in Gegenwart von Wasser ein sogenannter Korrosionsinhibitor, exemplarisch wird hier 1,2,3-Benzotriazol eingesetzt. Als besonders geeignet erweist sich der Einsatz von Maleinat-Harzen in Kombination mit phosphororganischen Verbindungen.

Um ein Austrocknen der Tinte während der Lagerzeit eines Auftragsgeräts oder auch während des Gebrauchs insbesondere im Bereich des Auftragselements zu verhindern, ist ein Feuchthaltemittel, beispielsweise Glykol, Glycerin, 1,2-Propandiol, 1,3-Butandiol, 1-Methoxy-2-Propanol enthalten. Als weiteres Additiv ist im Falle leicht oxidierbarer Metalle wie Aluminium ein Korrosionsinhibitor wie 1,2,3-Benzotriazol vorhanden, der die Reaktion mit Wasser verhindert. Weiterhin ist zur Verhinderung einer mikrobielle Verunreinigung der Tinte ein Konservierungsmittels, beispielsweise Bodoxin® oder Bodoxin® AH, enthalten. Die Tinten weisen einen pH-Wert von etwa 7 bis etwa 9 auf, sind also neutral bis leicht basisch. Falls erforderlich, ist zur Einstellung des pH-Werts der Tinte ein Alkalisierungsmittel, vorzugsweise Triethanolamin, zugesetzt.

Die Erfindung wird nun anhand von Ausführungsbeispielen und einer Zeichnung, die ein kapillares Auftragsgerät in Längsschnittdarstellung zeigt, näher erläutert.

In den folgenden Ausführungsbeispielen (siehe untenstehende Tabelle) sind Tinten angegeben, die entweder Harz 1 oder Harz 2 enthalten. Die Vergleichsbeispiele V1 und V2 betreffen Tinten, die anstelle eines Maleinatharzes der erfindungsgemäßen Art ein Polyesterharz (Harz 3) oder ein Acrylatharz (Harz4) enthalten, ansonsten aber eine den Beispielen 1 bis 5 vergleichbare Zusammensetzung aufweisen.

### Harz 3:

| | |
|---|---|
| Helles, gesättigtes ethanol- oder alkalilösliches Polyesterharz mit Carboxyl- und Hydroxylendgruppen; | |
| Schmelzpunkt (Kofler Heizbank, 6 min): | 65 ± 5 °C |
| Viskosität | |
| (Auslaufzeit 60%ig Ethanol / 20°C; DIN53211): | 30 - 70 s |
| Säurezahl DIN 53402 | 100-120 mg KOH / g |
| Iod-Farbzahl: 50 %ig Ethanol DIN6162 | ≤ 2 mgl / 100ml |
| Dichte des Rohmaterials bei 20 °C | ca. 1,2 g / cm³ |

### Harz 4:

| | |
|---|---|
| Acrylatharz, (z.B. Joncryl® 680 **⁸⁾**,) Molekulargewicht | 4.500 |
| Säurezahl (DIN53402) | 215 mg KOH/g |
| Dichte bei 25 °C | ca. 1,1 gr / cm³ |
| Glasübergangstemperatur Tg (DSC) | 91°C |

Zur Herstellung der Tinten werden deren Bestandteile in geeignete Gefäße, beispielsweise in Glasbehälter, gegeben und mit Hilfe von Rührwerkzeugen intensiv miteinander vermischt. Die so erhaltenen Tinten wurden in Auftragsgeräte (Marker) mit einem Faserspeicher geringer Dichte und einer üblichen Faserspitze eingefüllt.

Die in den Beispielen genannten Farbpigmente sind als Pigmentzubereitungen mit einem Festkörpergehalt von ca. 40 % erhältlich und werden als solche den Tinten bei deren Herstellung zugesetzt. Die entsprechenden Gehaltsangaben in den Beispielen sind auf den Feststoffkörper bezogen.

### Beispiele:

| | | | | | | | |
|---|---|---|---|---|---|---|---|
| Bodoxin AH | 0,7% | 0,7% | 0,7% | 0,7% | 0,7% | 0,7% | 0,7% |
| Bodoxin | 0,2% | 0,2% | 0,2% | 0,2% | 0,2% | 0,2% | 0,2% |
| Nuosperse FA 196² | 0,8% | 0,8% | 0,8% | - | 0,8% | 0,8% | 0.8% |
| Hostafine Gelb HR³ | - | - | 6,0% | - | - | - | - |
| Hostafine Rubin F6B³ | - | - | - | 7,2% | - | - | - |
| Hostafine Blau B2G³ | 6,8% | 6,8% | - | - | - | 6,8% | 6,8% |
| Euronyl Standard Grün 650⁴ | - | - | - | - | 6.8% | - | - |
| 1,2,3-Benzotriazol | 0,25% | 0,25% | 0,25% | 0,25% | 0,25% | 0,25% | 0.25% |
| Disperbyk 190 ⁵ | 0,70% | 0,70% | 0,7% | 0,7% | 0,7% | 0,70% | 0,70% |
| Stapa Hydroxal 2W 4000 Aluminiumpaste ⁶ | 6,0% | 6,0% | 7,0% | 5,0% | - | 6,0% | 6,0% |
| Aquaral 6252 / 63 W Aluminiumpaste ⁷ | - | - | - | - | 2,5% | - | - |

| Versuchsergebnisse | | | | | | | |
|---|---|---|---|---|---|---|---|
| Sedimentationsstabilität nach 4 Wochen | + | + | + | 0 | + | 0 | 0 |
| Farbmetalliceffekt auf schwarzem Papier | + | ++ | ++ | + | + | - | 0 |

Um die Sedimentationsstabilität der in der obenstehenden Tabelle angegebenen Tinten zu testen wurden diese unmittelbar nach ihrer Herstellung in ein kapillares Auftragsgerät (Marker), das in der untenstehenden Längsschnittdarstellung gezeigt ist, eingebracht. Das Auftragsgerät ist im Wesentlichen stiftförmig und weist einen Schaft 1 auf, in dem ein Polyesterfaserspeicher 2 geringer Dichte vorhanden ist. Das vordere Stiftende trägt eine Faserspitze 3, die mit ihrem hinteren Ende mit dem Faserspeicher 2 in Verbindung steht bzw. in diesen hineinragt. Mit einem derartigen Auftragsgerät wurden Aufstriche auf einer Papierunterlage erzeugt, um den Tintenfluss der Tinten durch die Faserspitze zu testen. Nach 4 Wochen wurde dieser Test wiederholt. Das Ergebnis ist in der Tabelle in der vorletzten Spalte wiedergegeben. "0" bedeutet, dass eine signifikante Sedimentation und ein verschlechterter Tintenfluss zu beobachten ist. Dies war bei den Vergleichsbeispielen V1 und V2 der Fall, die nicht die erfindungsgemäßen Harze, sondern ein Polyesterharz (Harz 3) bzw. ein Acrylatharz (Harz 4) enthalten. Die Tinten Nr. 1, 2, 3 und 5 zeigten dagegen eine gute (+) Sedimentationsstabilität. Bei der Tinte Nr. 4 wurde die phosphororganische Verbindung weggelassen, was eine mit den Tinten der Vergleichsbeispiele ähnliche Sedimentation bewirkte. Die Kombination dieser Verbindung mit Harz 1 oder Harz 2 scheint somit einen die Sedimentationsstabilität verstärkenden Effekt zu haben.

Zur Untersuchung der Farbpigment-Migration wurden mit dem genannten Auftragsgerät Aufstriche auf einer schwarzen Papierunterlage (Tonzeichenpapier, 125 g/qm, Canson Referenz 4331659 ^{**10**)}) erzeugt und nach einer Wartezeit von einigen Sekunden die Farbe des Abstrichs beurteilt. Wie der letzten Spalte der Tabelle zu entnehmen ist, zeigen alle erfindungsgemäßen Tinten eine gutes (+) bis sehr gutes (++) Ergebnis, d.h. die jeweilige Farbe war mehr oder weniger deutlich wahrnehmbar. Lediglich die Tinte Nr. 4 (keine phosphororganische Verbindung enthalten) zeigt eine gegenüber den ebenfalls Harz 1 enthaltenden Tinten eine etwas weniger kräftige Farbe. Dem Versuchsergebnis ist weiterhin zu entnehmen, dass die besten Ergebnisse hinsichtlich der Migration der Farbpigmente in die Papierunterlage mit Harz 1 erzielt werden. Was die Tinten V1 und V2 betrifft, so ist hier eine relativ starke Migration der Farbpigmente in das Papier zu beobachten, d.h. die ursprüngliche Farbe der Tinte ist auf der schwarzen Papieroberfläche stark (0) bzw. sehr stark verblasst und praktisch nicht mehr erkennbar (-).

### Hersteller:

1) Robert Krämer GmbH und Co, D-27755 Delmenhorst
2) Elementis, B-1831 Diegem
3) Clariant, Frankfurt am Main, Deutschland
4) Scholz Farben-Fabrikation, D-45665 Recklinghausen
5) Byk Chemie, D-46483 Wesel
6) Eckart GmbH, D-90763 Fürth
7) Benda-Lutz Werke, A-3133 Traismauer
8) BASF Nederlang B.V., Postfach 390, NL-8440 AJ Heerenveen
9) Sun Chemical Amelia, Ohio 45102, U.S.A.
10) Canson Papier, F-14200 Hérouville St.-Clair

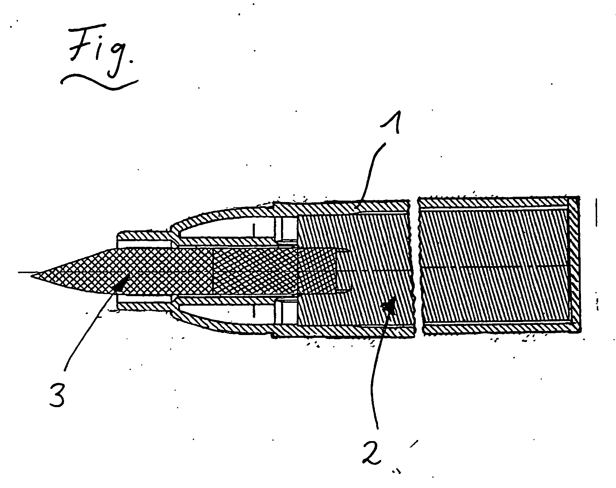

## Patentansprüche

1. Metallictinte mit 30% bis 80% Wasser, 0,4 % bis 10% Farbpigment mit einer Teilchengröße s 6 µm, 1 % bis 15% eines in gelöster Form vorliegenden Harzes aus der Gruppe Maleinatharz und/oder mit Maleinsäure modifiziertes Kolophoniumharz, 1 % bis 15 % Metallpigmenten mit einer Korngrößenverteilung D50 < 25 µm, 1 % bis 20% Feuchthaltemitteln, 0,1% bis 10% Additive und einer Viskosität von 5 - 10 mPa·s (Brookfield, Spindel CPE-40, 20 rpm).

2. Metallictinte nach Anspruch 1,
**dadurch gekennzeichnet,**
**dass** sie eine phosphororganische Verbindung als Dispergierhilfsmittel enthält.

3. Metallictinte nach Anspruch 1 oder 2,
**dadurch gekennzeichnet,**
**dass** Aluminiumpigmente enthalten sind.

4. Metallictinte nach einem der vorhergehenden Ansprüche,
**gekennzeichnet durch**
eine Viskosität von 5 - 10 mPa·s (Brockfield, Spindel CPE-40, 20 rpm).

5. Auftragsgerät mit einer Schreibspitze aus einem kapillaren Material und einem ein solches Material sowie eine Metallictinte nach einem der vorhergehenden Ansprüche enthaltenden Tintenspeicher.

## Claims

1. Metallic ink, comprising 30% % to 80 % of water, 0.4 % to 10 % of colour pigments having a particle size ≤ 6 µm, 1% to 15% of a dissolved resin from the group of maleinate resin and/or maleic-acid-modified rosin, 1 % to 15 % of metal pigments having a particle size distribution D50 < 25 µm, 1% to 20 % of humectants, 0.1 % to 10 % of additives, and having a viscosity of 5-10 mPa·s (Brookfield, CPE-40 spindle, 20 rpm).

2. Metallic ink according to claim 1, **characterized in that** it contains an organophosphorus compound as a dispersing aid.

3. Metallic ink according to claim 1 or 2, **characterized in that** aluminium pigments are contained.

4. Metallic ink according to one of the preceding claims, **characterised by** a viscosity of 5-10 mPa·s (Brookfield, CPE-40 spindle, 20 rpm).

5. Applicator, comprising a writing tip made of a capillary material and an ink store containing such a material and a metallic ink according to one of the preceding claims.

## Revendications

1. Encre métallique ayant de 30 à 80 % d'eau, de 0,4 % à 10 % de pigment colorant ayant une granulométrie inférieure ou égale à 6 µm, de 1 % à 15 % d'une résine présente sous forme dissoute choisie dans le groupe de la résine de maléinate et/ou de la résine de colophane modifiée par l'acide maléique, de 1 % à 15 % de pigment métallique ayant une répartition granulométrique D50 < 25 µm, de 1 % à 20 % d'agent de maintien de l'humidité, de 0,1 % à 10% d'additifs et une viscosité de 5 à 10 mPa.s (Brookfield, broche CPE-40, 20 tours à la minute).

2. Encre métallique suivant la revendication 1, **caractérisée en ce qu'**elle contient un composé phosphoro-organique comme adjuvant de dispersion.

3. Encre métallique suivant la revendication 1 ou 2, **caractérisée en ce qu'**elle contient des pigments d'aluminium.

4. Encre métallique suivant l'une des revendications précédentes, **caractérisée par** une viscosité de 5 à 10 mPa.s (Brookfield, broche CPE-40, 20 tours à la minute).

5. Appareil de tracé ayant une pointe d'écriture en un matériau capillaire et un encrier contenant un matériau de ce genre ainsi qu'une encre métallique suivant l'une des revendications précédentes.
